(19) Europäisches Patentamt
European Patent Office
Office européen des brevets

(11) Numéro de publication: **0 262 009 B1**

(12) **FASCICULE DE BREVET EUROPEEN**

(45) Date de publication de fascicule du brevet: **02.01.92**

(51) Int. Cl.[5]: **C07F 9/46**, C07F 11/00, C07F 9/50, C07F 9/53

(21) Numéro de dépôt: **87401904.5**

(22) Date de dépôt: **19.08.87**

(54) **Procédé de préparation de dérives de l'acide phosphineux et produit intermédiaire utilisé à cet effet.**

(30) Priorité: **27.08.86 FR 8612115**

(43) Date de publication de la demande: **30.03.88 Bulletin 88/13**

(45) Mention de la délivrance du brevet: **02.01.92 Bulletin 92/01**

(84) Etats contractants désignés: **BE CH DE GB IT LI NL**

(56) Documents cités:
**EP-A- 0 136 210**
**FR-A- 2 562 543**

(73) Titulaire: **SOCIETE NATIONALE ELF AOUITAI-NE**
**Tour Elf, 2, Place de la Coupole, La Défense 6**
**F-92400 Courbevoie(FR)**

(72) Inventeur: **Juge, Sylvain**
**15 Sentier de Chateaufort**
**F-91400 Orsay(FR)**
Inventeur: **Genet, Jean-Pierre**
**12 rue Jacquemin**
**F-92260 Fontenay-Aux-Roses(FR)**

(74) Mandataire: **Bertrand, Didier et al**
**Cabinet FEDIT-LORIOT 38, Avenue Hoche**
**F-75008 Paris(FR)**

EP 0 262 009 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

L'invention se rapporte à un procédé de préparation de dérivés de l'acide phosphineux. Elle ouvre une nouvelle voie d'accès aisé à des phosphinites, phosphines, oxydes de phosphines, diphosphinites, diphosphines, dioxydes de phosphines et produits similaires, par des réactions connues en soi, à partir des produits intermédiaires, nouveaux, selon la présente invention. Celle-ci comprend également un procédé d'obtention de ces composés intermédiaires.

Les différents composés, dérivés de l'acide phosphineux, nommés ci-dessus, ont diverses applications industrielles : ils servent à la synthèse de divers composés organiques du phosphore, et sont utilisés à la préparation de catalyseurs comprenant des ligants organo-phosphorés, optiquement actifs. Des phosphines s'appliquent avantageusement dans des systèmes catalytiques, par exemple pour la production de mercaptans à partir d'oléfines et de $H_2S$. On emploie également des phosphines pour la préparation de catalyseurs à base de métaux : notamment pour la polymérisation d'oléfines à l'aide de complexes du Ni avec des phosphines, ou bien l'isomérisation d'hydrocarbures non saturés avec des complexes de composés du Ru et de phosphines.

Etant donné l'intérêt que présentent ainsi différents dérivés de l'acide phosphineux, il était important de rechercher des moyens économiques de leur synthèse, en particulier synthèse asymétrique. La présente invention répond à ce besoin ; elle permet d'obtenir les dérivés en question par un nombre d'opérations moindre que celui qu'exigeaient les procédés antérieurs. Il est possible, grâce à l'invention, d'obtenir des composés optiquement actifs, tout en récupérant intact l'inducteur asymétrique.
"Des phosphonites cycliques ont été décrits précèdemment, dans la demande de brevet FR publiée sous le N° 2 562 543; mais il n'y est pas question de phosphinites qui font l' objet de la présente invention et s'obtiennent à partir de composés cycliques par une réaction autre que l'action d'halogénures alkyliques qui transforment en phosphinates les phosphonites de la publication antérieure".

Les composés intermédiaires, ainsi q ue les dérivés de l'acide phosphineux peuvent être sous une forme complexée, ce qui présente généralement l'avantage d'une meilleure stabilité et moindre oxydabilité.

Les composés intermédiaires, suivant l'invention, sont les composés organiques du phosphore caractérisés par la structure :

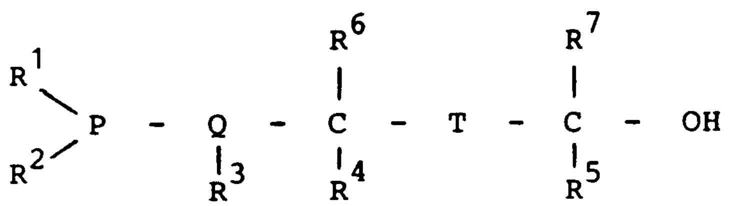
..(1)

où Q est un atome de N ou de O, T est un alkylène pouvant porter des substituants, ou bien n'existe pas du tout, tandis que $R^1$ à $R^7$, semblables ou différents, sont des H ou des radicaux hydrocarbonés, aliphatiques, cycloaliphatiques ou/et aryliques, $R^3$ n'existant pas lorsque Q est de l'oxygène. Plus particulièrement, les $R^1$ à $R^7$ peuvent être des alkyles en $C_1$ à $C_{18}$ ou des alkényles jusqu'à $C_{18}$ et surtout alkyles en $C_1$ à $C_6$, ou alkényles jusqu'à $C_6$ ou bien des phényles pouvant porter un ou plusieurs substituants alkyliques en $C_1$ à $C_6$. Cela signifie que certains des groupes $R^1$ à $R^7$ peuvent être des aryles, et d'autres des alkyles, cycloalkyles ou alkényles, éventuellement substitués.

En particulier $R^1$ peut être méthyle, éthyle, propyle ou butyle, $R^2$ étant phényle, ou inversement.

Ces composés peuvent exister et être utilisés sous une forme complexée sur l'atome de phosphore par un composé métallique M :

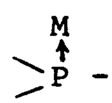

les complexants métalliques pouvant être, par exemple, différents carbonyles de métaux de transition, en particulier $W(CO)_5$ ou $Mo(CO)_5$, des halogénures métalliques comme CuBr, des hydrures, notamment $BH_3$, etc.

En outre, l'invention comprend les di-composés de ceux de la formule (1), qui peuvent être représentés par la formule (2) ci-après

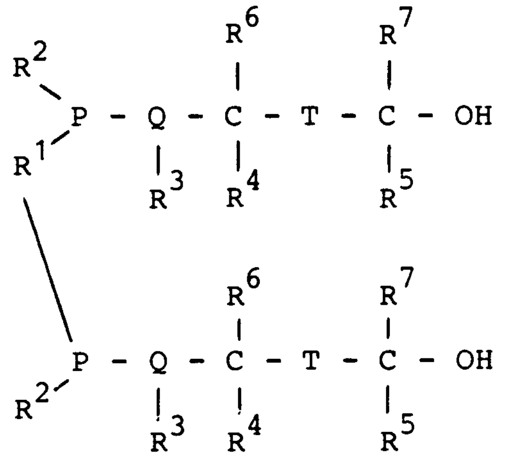

... (2)

où $R^1$ est un radical hydrocarboné divalent, notamment un alkényle, cycloalkényle ou arylène.

Comme dans le cas des mono-composés, les dicomposés de la formule (2) peuvent être complexés sur l'un ou les deux atomes de P.

Lorsque Q est un atome d'azote, les composés intermédiaires suivant l'invention sont des hydroxymonoaminophosphines et dihydroxy di-(amino phosphines).

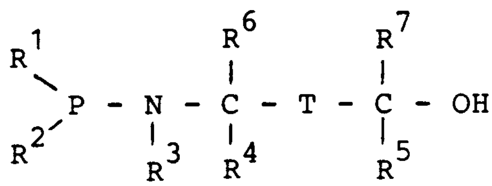

..... (3)

et

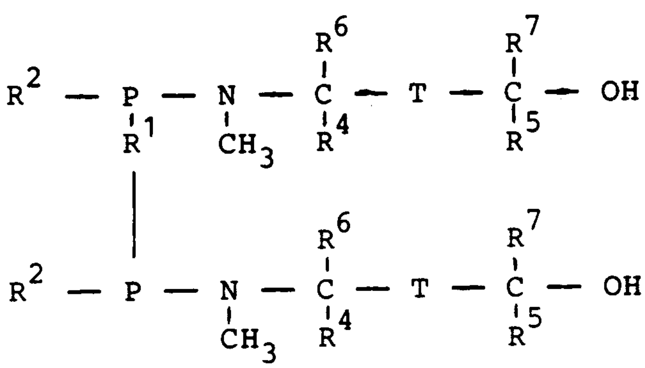

... (4)

Quand Q est un atome d'oxygène, ces composés sont respectivement des phosphinites et des diphosphinites du radical hydrocarboné $-CR^4R^6-T-CR^5R^7-OH$ porteur d'un hydroxyle en bout de chaîne.

Quelques uns de ces composés intermédiaires sont décrits, à titre d'exemples, plus loin, après la description d'un procédé de leur préparation.

Les produits intermédiaires, suivant l'invention, sont préparés par un procédé caractérisé en ce que l'on fait réagir un composé organo-métallique sur un oxazaphosphacycloalcane, un di-oxazaphosphacycloalcane, un dioxaphosphacycloalcane ou un bis-dioxaphosphacycloalcane, pius on hydrolyse le sel organo-métallique formé.

Autrement dit, on effectue une préparation selon le schéma suivant :

(5) ...

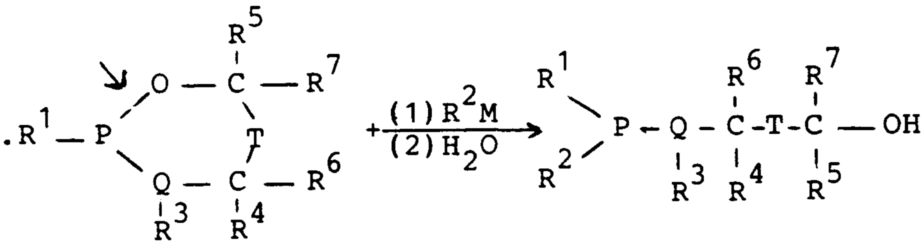


ou, de façon analogue, en partant d'un di-composé

(6) ...

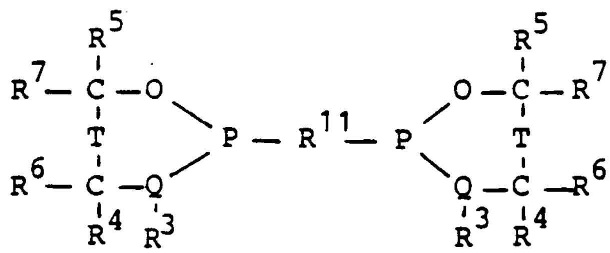

Conviennent à la réalisation de l'invention les organométalliques courants, tels que magnésiens, aluminiques, zinciques, etc. et tout particulièrement les organo-lithium, notamment les aryl-lithium et alkyl-lithium avec alkyles en $C_1$ à $C_{12}$. $R^{11}$ est alkényle ou arylényle.

La réaction peut avoir lieu avec un oxa-composé de départ complexé sur le phosphore, pour donner des intermédiaires complexés, comme indiqué plus haut, à propos du composé (1).

A partir des intermédiaires (1) et (2) il est aisé de passer à différents dérivés de l'acide phosphineux, intéressants pour l'industrie, en général par des réactions connues en soi, économiques.

Ainsi peut-on, à partir d'une aminophosphine hydroxylée (3), accéder à un phosphonite par alcoolyse :

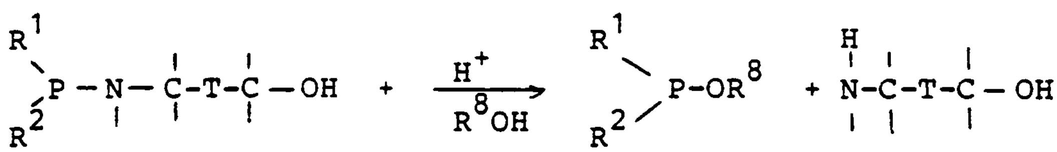


phosphinite

et le phosphinite peut être transformé en phosphine

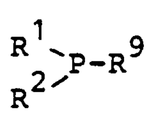

par l'action d'un organométallique,en particulier Mg ou Li, d'aryle ou d'alkyle $R^9$. Cela permet l'obtention de trialkyl-, dialkyl- aryl-, azyl-dialkyl- et triaryl-phosphines optiquement actives, avec bon rendement.

Une autre application du produit intermédiaire (3) réside en la synthèse d'un oxyde de phosphite, par l'action d'un halogénure d'alkyle sur l'aminophosphine (3) :

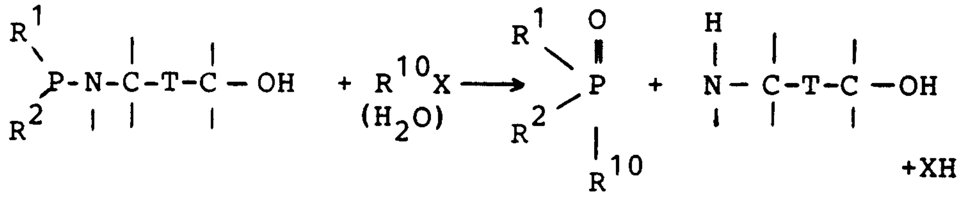

oxyde de phosphine

Une telle réaction se fait avec bon rendement et permet d'obtenir l'oxyde de phosphine avec une pureté optique de 40 à 100%.

On peut également obtenir une halogéno-phosphine

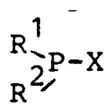

par l'action d'un hydracide HX sur le composé (3).

L'acide phosphineux lui-même peut être produit par l'hydrolyse du composé (3).

De tels corps - sauf l'oxyde de phosphine - peuvent être obtenus sous une forme complexée, par les mêmes réactions appliquées à un complexe

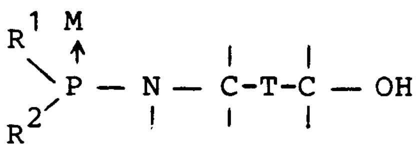

... (3')

où M représente un groupe métallique complexant, en particulier $W(CO)_5$, $Mo(CO)_5$, ou bien $BH_3$.

De manière analogue obtient-on un diphosphinite, un dioxyde de phosphine, une dihalogéno-phosphine ou diacide phosphineux par - respectivement - l'alcoolyse, l'action d'un halogénure d'alkyle, celle d'un hydracide ou l' hydrolyse d'une dihydroxy aminophosphine (4) mentionnée plus haut.

Comme exposé à propos de la réaction (5), un produit intermédiaire suivant l'invention peut être préparé par l'action d'un organo-métallique et hydrolyse, sur un composé cyclique du phosphore dont le cycle comprend (en Q) un atome d'azote ou d'oxygène. Lorsque Q est O, le composé cyclique (5) de départ est un dioxaphospha cycloalcane

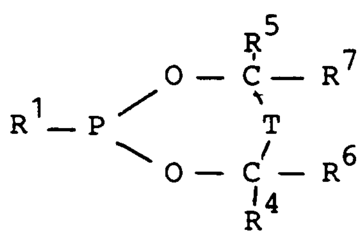

qui, après réaction avec un organo-métallique $R^2M$ et hydrolyse subséquente, donne un phosphinite

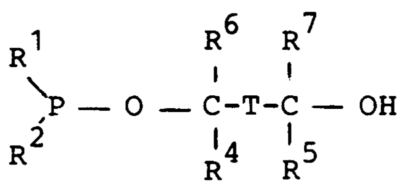

... (7)

De la même manière un bis-dioxaphospha cycloalcane selon formule (6) donne un diphosphinite

analogue au composé (2).

Ce mode de préparation des composés intermédiaires, suivant l'invention, est particulièrement pratique et économique, puisque la matière première, c'est-à-dire les dioxaphospha cycloalcanes et les bis-dioxaphospha cycloalcanes s'obtiennent facilement, notamment par condensation de la dichlorophosphine commerciale avec un diol correspondant.Ils conduisent régio- et stéréo-spécifiquement à des phosphinites (7).

Comme les amino-phosphines (3), les phosphinites hydroxylés (7) permettent la synthèse des différents dérivés de l'acide phosphineux, en particulier leur synthèse asymétrique. Ainsi donnent-ils des oxydes de phosphines par réaction avec des halogénures d'alkyles ; des phosphines par l'action d'un organo-métallique, éventuellement complexées,par exemple avec du CuBr, $W(CO)_5$ ou $BH_3$.

On notera qu'après avoir utilisé une phosphine commerciale, symétrique, telle qu'une dichlorophosphine pour la préparation de la matière première, le dioxaphospha cycloalcane, on peut obtenir stéréosélectivement, après la réaction (5) et un second traitement avec un organo-métallique, une nouvelle phosphine, asymétrique. Pour cela, après la première opération (5) on effectue :

(8) ... 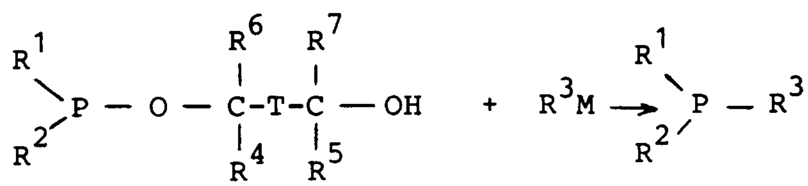

phosphine asymétrique

Il y a lieu également d'observer que, dans le cadre de l'invention, il est possible d'employer des inducteurs asymétriques, facilement accessibles et peu coûteux, tels que le chloramphénicol, des dérivés du lactate d'éthyle ou de camphoquinone.

D'autre part, comme on vient de le voir, une phosphine peut être préparée en seulement 3 étapes à partir d'un diol, les deux dernières, c'est-à-dire les réactions (5) et (8) pouvant être réalisées dans le même milieu solvant, l'une après l'autre. En outre, la phosphine peut être complexée dans ce même milieu, pour donner un composé stable, facile à conserver.

Toutes les réactions, auxquelles donnent lieu les phosphinites (7), peuvent également être réalisées, de façon analogue, avec les diphosphinites

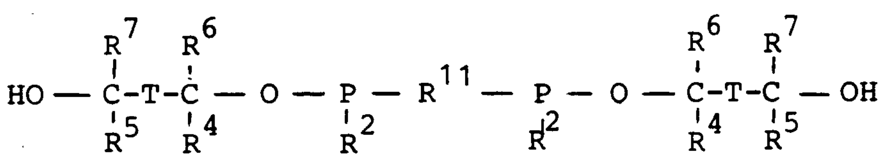

... (9)

L'invention est illustrée par les exemples non limitatifs qui suivent.

EXEMPLE 1

Préparation de N-méthyl N-(hydroxy-1 phényl-1 propyl-2) méthyl phényl amino phosphine (Sp, 1R, 2S)

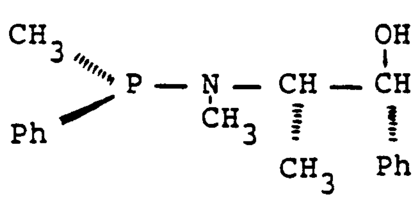

... (10)

c'est-à-dire composé de formule (3), donnée plus haut, dans laquelle $R^1$ et $R^4$ sont des méthyles, $R^2$ et $R^5$ des phényles, $R^6$ et $R^7$ étant des atomes d'hydrogène, tandis que T n'est qu'une simple liaison.

La préparation est effectuée suivant la réaction (5), de la façon suivante.

Dans un ballon de 100 ml, muni d'un agitateur, 1 mmole (271 mg) d'oxazaphospholidine

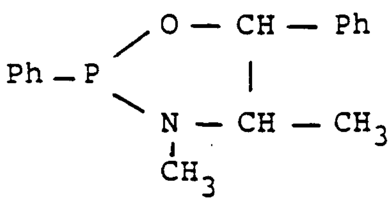

..... (5')

$[\alpha]_D$ = +40°

est dissoute dans 5 ml de THF. Au mélange refroidi, placé sous atmosphère inerte, notamment d'argon, est ajoutée 1 mmole de $LiCH_3$ soit 625 µl de solution de méthyl-lithium 1,6M. Après 15 min d'agitation, 1 mmole d'eau est ajoutée pour neutraliser le mélange réactionnel, puis la température est ramenée à 25° C. L'analyse RMN $^{31}P$ (20%.$C_6D_6$.THF), indique la formation quantitative de l'aminophosphine (10) ($\delta^{31}P$ = -26,4 ppm). La structure de (10) est confirmée par la formation du complexe tungstique (10') du type (3') avec $W(CO)_5THF$ selon un mode opératoire classique, c'est-à-dire irradiation 1/2 h du $W(CO)_6$ dans THF, puis addition de l'aminophosphine (10). Purification par chromatographie sur silice ; obtenu 410 mg ; rendement 67%.

Voici les caractéristiques du complexe (10') non cristallisé

$\delta^{31}P$ = + 64 ppm ($CDCl_3$)  $J_{PW}$ = 261 Hz

RMN $^1H$ ($CDCl_3$)

| | | | |
|---|---|---|---|
| doublet | (3H) | 1,2 ppm | J = 7Hz |
| " | (3H) | 1,8 " | $J_{PH}$ = 5Hz |
| " | (3H) | 2,6 " | |
| multiplet | (1H) | 3,8 " | |
| doublet | (1H) | 4,6 " | $J_{HH}$=8Hz |
| massif | (10H) | 6,8-7,6 ppm | |

Analyse $C_{22}H_{22}NO_6PW$

| | % C | % H | % N |
|---|---|---|---|
| calculé : | 43,21 | 3,6 | 2,29 |
| trouvé : | 43,00 | 3,36 | 2,55 |

IR (net)

$\bar{V}_{OH}$ = 3400 $cm^{-1}$

$\bar{V}_{CO}$ = 2080 $cm^{-1}$, 1926 $cm^{-1}$, 1980 cm

Masse : (W = 184)  $M^{\cdot +}-28$ = 583

Pouvoir rotatoire : $[\alpha]_D^{19}$ = +7,03 (c=7. $CH_2Cl_2$)

Les composés (10) et (10') sont nouveaux et illustrent par leur exemple l'action d'un alkyl-lithien selon le schéma réactionnel (5).

EXEMPLE 2

Prépartion d'un diastéréoisomère du composé (10) de l'exemple 1, à savoir du N-méthyl N-(hydroxy-1 phényl-1 propyl-2) méthyl phényl amino-phosphine ($R_p$,1R,2S)

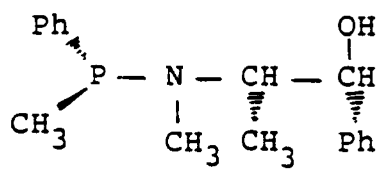

...(11)

Selon un mode opératoire similaire à celui de l'exemple 1, 1 mmole de phényl-lithium, soit 1 ml de solution 1M, est ajouté à 1 mmole (209 mg) d'oxazaphospholidine (5")

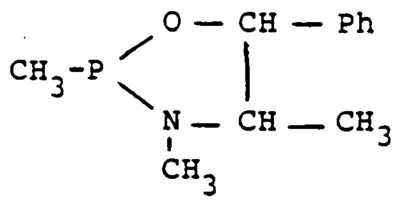

...... (5")

Après 30min à -78 °C, le milieu réactionnel est hydrolysé avec 40 µl de $H_2O$. L'analyse RMN $^{31}P$ indique la formation du composé (11) : $\delta^{31}P$ = -26 ppm, $C_6D_6$ + THF. La structure de (11) est confirmée par complexation avec $W(CO)_5THF$, ce qui conduit au composé (11'), diastéréoisomère de (10') purifié par chromatographie sur silice (éluant hexane-Ac OEt 10%) ; - obtenu 310 mg - rendement 50%.

Caractéristique du composé (11'), c'est-à-dire du (11) portant le groupe complexant $W(CO)_5$ sur l'atome de P :

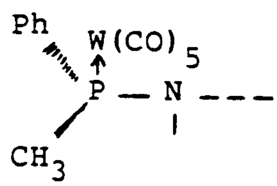

$\delta^{31}P$ = + 64,1 ppm    Jpw = 260 Hz
masse : (W=184)$M^{\cdot +}$ - 28 = 583
RMN $^1H$ ($CDCl_3$)
doublet (3H) 1,25 ppm    J = 7Hz
" (3H) 2,05 ppm    $J_{PH}$=5Hz
" (3H) 2,55 "
multiplet (1H) 3,8 "
doublet (1H) 4,6 "    $J_{HH}$=9Hz
massif (10H) 6,8-7,6 "
IR(net) $\bar{V}_{OH}$ = 3400 $cm^{-1}$
$\bar{V}_{C=O}$=2080 $cm^{-1}$ , 1980 $cm^{-1}$, 1925 $cm^{-1}$

Les composés (11) et (11') sont nouveaux, et illustrent à titre d'exemples l'addition d'un aryl-lithien selon l'invention.

EXEMPLE 3

Préparation de N-méthyl N-(hydroxy-1 phényl-1 propyl-2) butyl phényl aminophosphine (5p, 1R, 2S). Selon un mode opératoire similaire à celui de l'exemple 1, 1 mmole de butyl-lithium est additionné à 271 mg d'oxazaphospholidine (5') ($R^1$ = Ph). Après 2 heures de réaction à une température comprise entre -78° et -40° C (RMN $^{31}P$ $\delta$ = -26,4 ppm), on récupère l'aminophosphine produite.

EXEMPLE 4

Préparation d'une amino-phosphine complexée (3') à partir d'une oxazaphospholidine portant le groupe complexant $W(CO)_5$ sur le phosphore

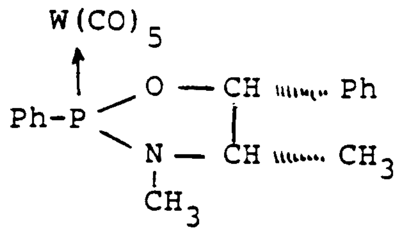

....(12)

par l'action de $CH_3Li$ sur ce composé (12).

Dans un ballon de 100 ml, 595 mg de complexe (12) (~1 mmole) sont dissous dans 5 ml de THF anhydre et placés en atmosphère inerte (Ar) à -78° C. Après addition de 1 mmole de méthyl-lithium, le mélange est laissé dans ces conditions pendant 6 h, puis il est neutralisé avec 40 µl d'eau et séché sur du $Na_2SO_4$. L'évaporation du solvant donne un résidu qui est chromatographié sur silice (éluant : AcOEt 5%, Hexane 95%) ; obtenu 470 mg ; rendement 77%.

Le composé obtenu a les mêmes caractéristiques que le complexe (10') préparé selon l'exemple 1.

Il est à noter que sous la forme complexée les composés sont plus stables, bien moins sujets à l'oxydation.

Par des opérations analogues, mais en partant de l'oxazaphospholidine (5') complexés sur P, de l'exemple 2, et en remplaçant $CH_3Li$ par du $C_6H_5Li$, on obtient l'amino phosphine (11') complexée, comprenant le groupe

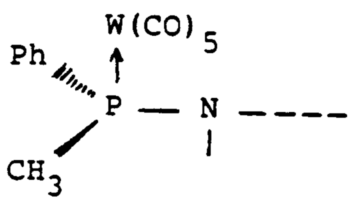

dont les caractéristiques sont données dans l'exemple 2.

EXEMPLE 5

Préparation d'un produit intermédiaire (7) à partir d'un dioxa phospha cycloalcane.

La réaction (5) est appliquée au dioxa phospha cycloalcane, c'est-à-dire le dioxaphospholane (Q = O)

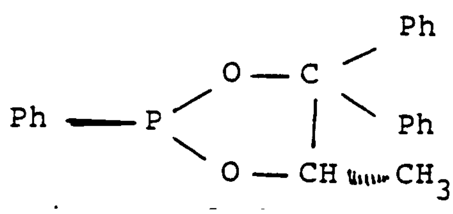

que l'on fait réagir avec du butyl-lithium.

Dans un ballon de 100 ml, muni d'un agitateur, 334 mg (1 mmole) de dioxaphospholane sont dissous dans 5 ml de THF en atmosphère d'argon. Au mélange refroidi à -78° C est ajouté 1 mmole de butyl-lithium, soit 500 µl de solution 2M. Après 10 min sous agitation l'analyse RMN $^{31}P$ du mélange (20% $C_6D_6$ de THF) indique la formation quantitative du phosphinite ($\delta^{31}P$ = -26,5 ppm)

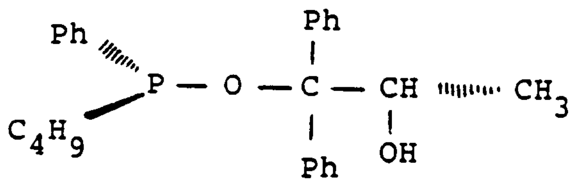

....... (13)

soit de butyl phényl phosphinite de diphényl-1,1 hydroxy-2 propyle (Rp, 2S).

Ce composé est nouveau. Sa formation est confirmée par sa réaction avec 1 équivalent de $CH_3Li$ à -78° C, directement dans le mélange réactionnel de sa préparation, puis arrêt de la réaction par addition de $H_2O$. On obtient, avec un rendement de 61%, la phosphine

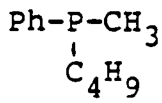

qui présente les caractéristiques suivantes.
RMN$^{31}P$ $\delta$ = - 37 ppm (20% $C_6D_6$ - THF)
RMN $^1H$
massif 0,65 - 1,78 ppm (9H)
doublet 1,5 ppm (3H)  $J_{PH}$ = 15 Hz
massif 7 - 7,8 ppm (5H)

EXEMPLE 6

Préparation d'un intermédiaire (7) à substituants dérivés du chloramphénicol, à partir d'un dioxaphosphorinane (14) spécial.
Ce composé (14 ) est le phosphonite (-) dichloroacétamido-5 (nitro-4 phényl)-4 phényl-2 dioxaphosphorinane-1,3,2(2R,4R, 5R)

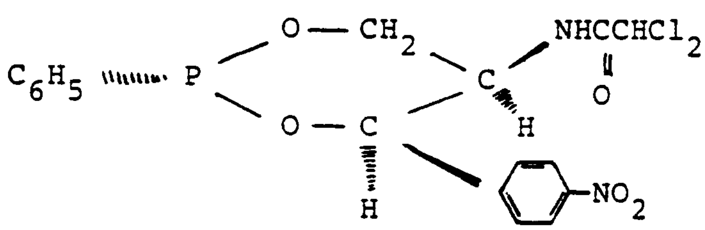

..... (14)

dont la préparation est décrite dans la publication de brevet français 2 562 543, page 8.

Le mode opératoire de la réaction du composé (14) avec de l'ortho-anisyl-lithium

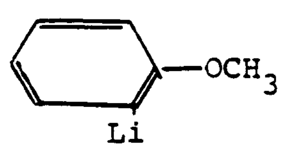

est le même que dans l'exemple 5, sauf que trois équivalents d'o-anisyl-Li, au lieu de Bu-Li sont ajoutés à 429 mg de dioxaphosphorinane (14).

Le produit nouveau,obtenu après 4 heures à -78° C ↗ -40° C, est l'o-anisyl phényl phosphinite

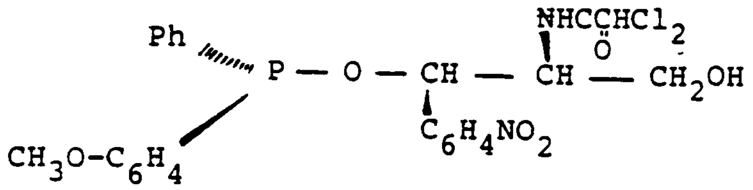

.....(15)

EXEMPLE 7

Application du composé intermédiaire, complexé, (10'), à la production d'halogéno-phosphine (16).
Le complexe (10'), décrit dans l'exemple 1, est traité par de l'HCl gazeux en solution dans du dichlorométhane, ce qui donne lieu à la réaction :

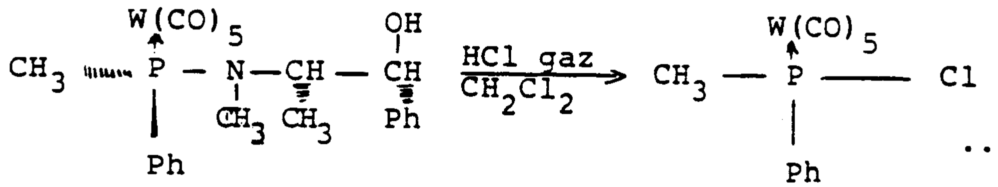


(10')

... (16)

Dans un ballon de 100 ml, on introduit 95 mg d'aminophosphine complexée(10'), dissoute dans 10 ml de $CH_2Cl_2$.

Après 30 min d'un bullage d'HCl gazeux sec, la CCM indique la disparition du produit de départ. La filtration sur millipore du mélange réactionnel, suivie de l'évaporation du solvant, donne 70 mg du composé (16) avec un rendement de 93%. Le précipité, formé au cours de la réaction, s'avère être le chlorhydrate d'éphedrine ($[\alpha]_D$ = -34,6° ).

Caractéristiques du composé (16) :
RMN $^{31}P$ ($CDCl_3$) $\delta$ = +103,6 ppm Jpw = 290 Hz
RMN $^{1}H$ ($CDCl_3$)
doublet (3H) 2,57 ppm $J_{PH}$ = 5 Hz
massif (5H) 7,4 - 8 ppm
Masse : (w = 184) (EI :70 eV)
$M^{\bullet +}$ = 482
pic de base 342 ($M^{\bullet +}$ -140)
IR (KBr)
$\overline{\nu}_{co}$ = 2065, 1930 $cm^{-1}$

EXEMPLE 8

Application d'un produit intermédiaire (10') à la préparation d'un acide phosphineux. Les complexes étant plus stables et moins oxydables que les composés phosphineux eux-mêmes, on a utilisé ici encore le composé (10') complexé comme dans l'exemple 7. La décomplexation se faisant commodément, à la manière connue en soi, il n'y a pas lieu de la décrire.

L'acide phosphineux complexé est obtenu par hydrolyse acide à partir de l'amino-phosphine (10')

Composé complexé (10') +

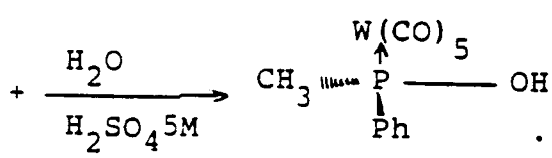


...(17)

Pour cela, dans un ballon de 100 ml, muni d'un réfrigérant ascendant, 1 mmole d'aminophosphine complexée (611 mg) est chauffée pendant 1 h à 65° C dans 10 ml d'un mélange acétonitrile - acide sulfurique $CH_3CN/H_2SO_4$5M (10:1). Après refroidissement, le mélange est neutralisé par du $NaHCO_3$ en

solution aqueuse saturée, puis extrait avec du $CH_2Cl_2$. Le séchage, puis l'évaporation de la phase organique, donne un résidu qui est chromatographié sur silice pour séparer (AcOEt 10% - Hexane - rf 0,4- ; le composé (17) obtenu 450 mg, rendement 97% $[\alpha]_D$ = +4,8° (c=3 $CH_2Cl_2$)
non cristallisé
RMN $^{31}P$ ($CDCl_3$) $\delta$ = +102,9 ppm $J_{pw}$ = 264 Hz
RMN $^1H$ ($COCl_3$)
doublet (3H) 2,12 ppm $J_{PH}$ = 6 HZ
singulet large (1H) 4,6 ppm
massif (5H) 7,3-7,6 ppm
IR : (net) $\overline{V}_{OH}$ 3600 $cm^{-1}$ , 2700 $cm^{-1}$
$\overline{V}_{C=O}$ 2080 $cm^{-1}$ , 1925 $cm^{-1}$
Masse : W = 184 (EI, 70eV)
$M'^{+}$ = 464
$M'^{+}$ - 140 = 324 (pic de base)

EXEMPLE 9

Application du composé intermédiaire (10') complexé à la préparation d'un phosphinite d'alkyle.
Le complexe tungstique, l'amino-phosphine (10') obtenu suivant l'exemple 1, est soumis à la méthanolyse qui donne:

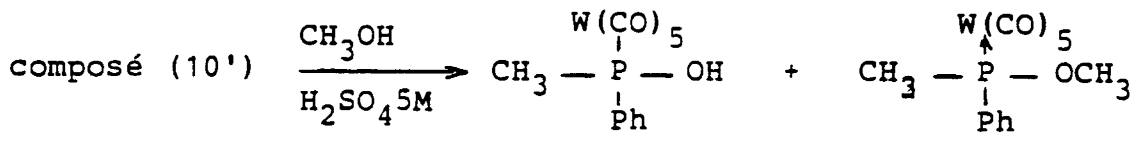


(17) (18)

Dans un ballon de 100 ml, muni d' un agitateur , 560 mg , c'est-à-dire 0,92 mole, d'amino phosphine complexée (10') sont dissous dans 5ml de méthanol/$H_2SO_4$5M. Après 3 heures à température ambiante, le mélange est neutralisé par une solution de $NaHCO_3$ saturée et extrait par du $CH_2Cl_2$. Le séchage et l'évaporation de la phase organique donnent 380 mg d'un résidu qui s'avère êtreun mélange 4 : 1 des produits (17) et (18) (Rendement 80%), que l'on sépare par chromatographie sur silice (AcOEt 10% - Hexane).
Le pouvoir rotatoire de l'ester phosphineux (18) obtenu est
$[\alpha]_D$ = +1,2° (c - 1,2; $CH_2Cl_2$).

En remplaçant le méthanol par de l'isopropanol dans la préparation ci-dessus, on obtient en deux heures à 68° C l'ester isopropylique homologue du produit (17).

EXEMPLE 10

Application d'un produit intermédiaire du type (7), en particulier (13), à la production d'une phosphine. Le composé (13) de l'exemple 5 est traité par un organo-métallique, notamment par un alkyl- ou aryllithium, puis le milieu réactionnel est bloqué par l'addition d'une faible quantité d'eau.

1 équivalent $CH_3Li$ est ajouté à 1 mmole de composé (13) en solution dans du THF et le mélange est maintenu à -78° C durant 10 minutes. Après évaporation du solvant à froid, on reprend le résidu à l'hexane et l'on sépare les sels minéraux par filtration. Une nouvelle évaporation donne, avec un rendement de 61%, 140 mg.

Un avantage de l'invention est que cette opération peut être aisément réalisée dans le même milieu réactionnel, dans lequel a été préparé le composé intermédiaire (voir exemple 5).

On peut donc opérer en deux étapes dans le même solvant :

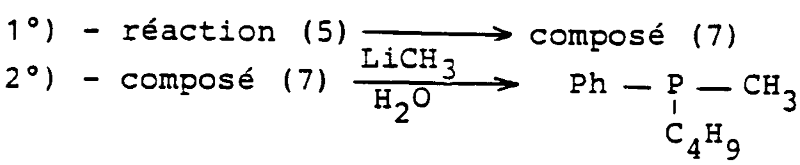

Après séparation de ce dernier produit, on peut le transformer en oxyde de phosphine, par exemple en le traitant à $H_2O_2$.

EXEMPLE 11

Application du composé intermédiaire (15) à la préparation d'une phosphine.
L'ortho-anisyl phényl phosphinite (15) de l'exemple 6 est chauffé à 60°C, pendant 3 heures, avec une quantité stoechiométrique de $CH_3I$ en solution dans du THF. L'évaporation du solvant laisse un résidu que l'on chromatographie sur silice (acétone).

Le produit obtenu est l'oxyde d'ortho-anisyl méthyl phényl phosphine

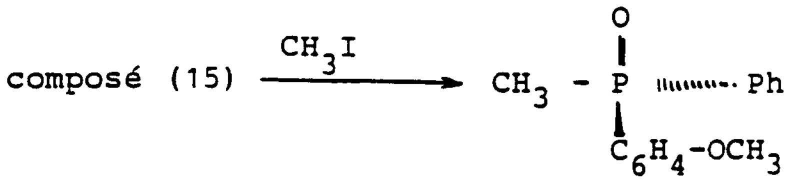


identifié par les caractéristiques suivantes :
$[\alpha]_D^{20}$ = -11,97° (c = 2; $CH_3OH$)
RMN $^1H$

| | | | |
|---|---|---|---|
| doublet | 2,05 ppm | (3H) | $J_{PH}$ 15Hz |
| singulet | 3,7 ppm | (3H) | |
| massif | 6,8-8,1 " | (3H) | |

Comme sous-entendu à la page 2, ligne 26, $R^1$ peut être, en particulier, méthyle, éthyle, propyle ou butyle, $R^2$ étant phényle, ou inversement.

EXEMPLE 12

Préparation de N-méthyl N-(hydroxy-1 phényl-1 propyl-2) o-anisyl phényl phosphine ($R_p$ ; 1R, 2S)

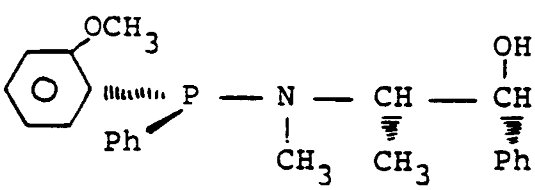
.... (19)

c'est le composé de formule (3) donnée plus haut, dans laquelle $R^1$ est o-anisyle, $R^2$ et $R^5$ des phényles, $R^3$ et $R^4$ des méthyles, $R^6$ et $R^7$ des atomes d'hydrogène, tandis que T n'est qu'une simple liaison. Le composé 19 est nouveau. La préparation est effectuée suivant un mode opératoire similaire à celui de l'exemple 1, en remplaçant le méthyl-lithium par de l'o-anisyl-lithium. La durée de réaction est alors de 3h, et la température augmentée graduellement de -78° à -20°C. L'amino phosphine n'est pas isolée, mais piégée avec 2 équivalents d'iodure de méthyle pour donner de l'oxyde d'o-anisyl méthyl phényl phosphine décrit dans l'exemple 11. Ici la réaction est :

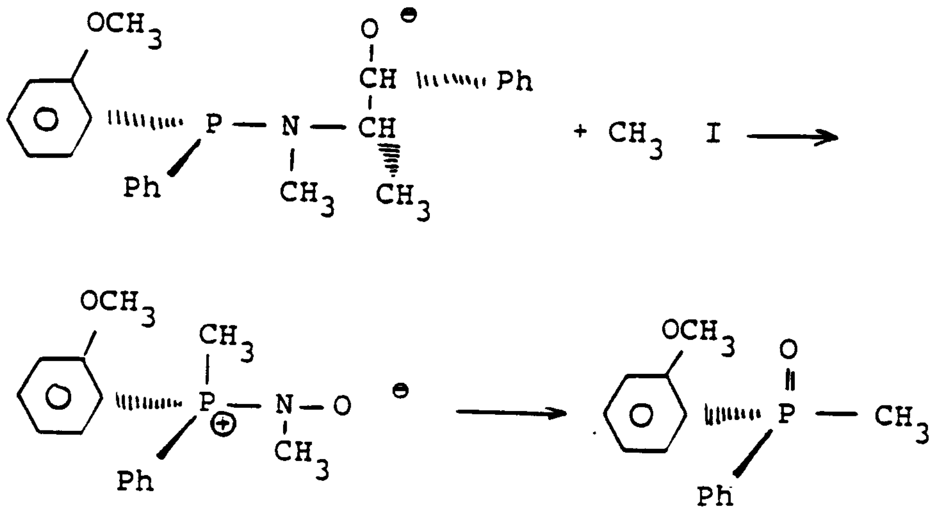

$[\alpha]_D = -20°$

(C=2 $CH_3OH$)

EXEMPLE 13

Préparation d'un phosphinite,produit intermédiaire (7), à partir d'un dioxaphosphacycloalcane obtenu par condensation de (méthoxy-2 phényl) dichloro phosphine avec le (-) diphényl-1,1 propane d'ol-1,2 (2S) (20)

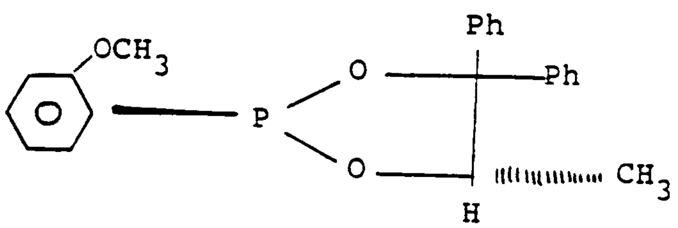

(20)

qui est un composé nouveau. Selon le mode opératoire décrit dans l'exemple 5, on fait réagir 1 mmole du dioxaphospholane (20) avec 1 équivalent de méthyl-lithium dans 10 ml de THF à -78° C. Après 5 min sous agitation, l'analyse RMN $^{31}P$ indique $\delta^{31}P$ = 26 ppm qui est caractéristique du phosphinite 21

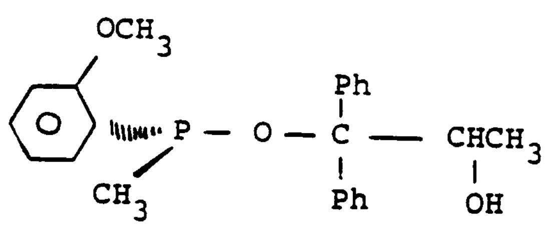

... (21)

L'o-anisyl méthyl phosphinite de diphényl-1,1 hydroxy-2 propyle ($R_p$,2S) est un composé nouveau. Sa formation est confirmée par addition d'un équivalent de phényl-lithium. Après une demi-heure,le milieu est hydrolysé et évaporé à sec (poids obtenu 330 mg). L'analyse RMN$^1$H indique un mélange d'o-anisyl méthyl phényl phosphine et de diphényl-1,1 propane diol-1,2. Rendement en phosphine : 50%

Huile jaune clair

RMN $^1$H o-anisyl méthyl phényl phosphine

($CDCl_3$)

| | | | | |
|---|---|---|---|---|
| doublet | (3H) | $J_{HP}$ | 4Hz | 1,63 ppm |
| singulet | (3H) | | | 3,85 ppm |
| massif | (9H) | | | 7 - 7,9 ppm |

L'addition de 5 ml d'$H_2O_2$ à 20% au milieu permet la transformation en oxyde de phosphine. Après lavage à l'eau et extraction au dichlorométhane, la phase organique est évaporée et le résidu est chromatographié sur silice (éluant: acétone -rf0,5). L'oxyde de phosphine est obtenu avec un rendement de 50%.
$[\alpha]_D$ = -5,1° (20ee)

EXEMPLE 14

Application de l'acide phosphineux complexé (17) pour la préparation du phosphinite de méthyle (18).
Le complexe tungstique 17 ($[\alpha]_D$ = 17° pF=115°) a été obtenu selon le mode opératoire décrit dans l'exemple 9 (isopropanol/$H_2SO_4$SM) . 100 mg du complexe 17 sont dissous dans 10 ml d'une solution éthérée de diazométhane 0,4 M à 0° C. Après 4 heures d'agitation, la solution est évaporée et chromatographiée sur silice : 10% AcoEt/Hexane (rf 0,8). Le phosphinite 18 est obtenu avec 60% de rendement (63 mg)
$[\alpha]_D$ = + 1,46° (c = 1; $CH_2Cl_2$)
RMN $^1H$ ($CDCl_3$)

| | | | |
|---|---|---|---|
| doublet | (3H) | 2,15 ppm | $J_{PH}$ = 6Hz |
| " | (3H) | 3,5 ppm | $J_{POCH}$ = 12Hz |
| massif | (5H) | 7,5-7,8 ppm | |

RMN $^{31}P$ ($CDCl_3$) = +114 ppm

EXEMPLE 15

Préparation d'un phosphinite intermédiaire (23) complexé au groupe $W(CO)_5$

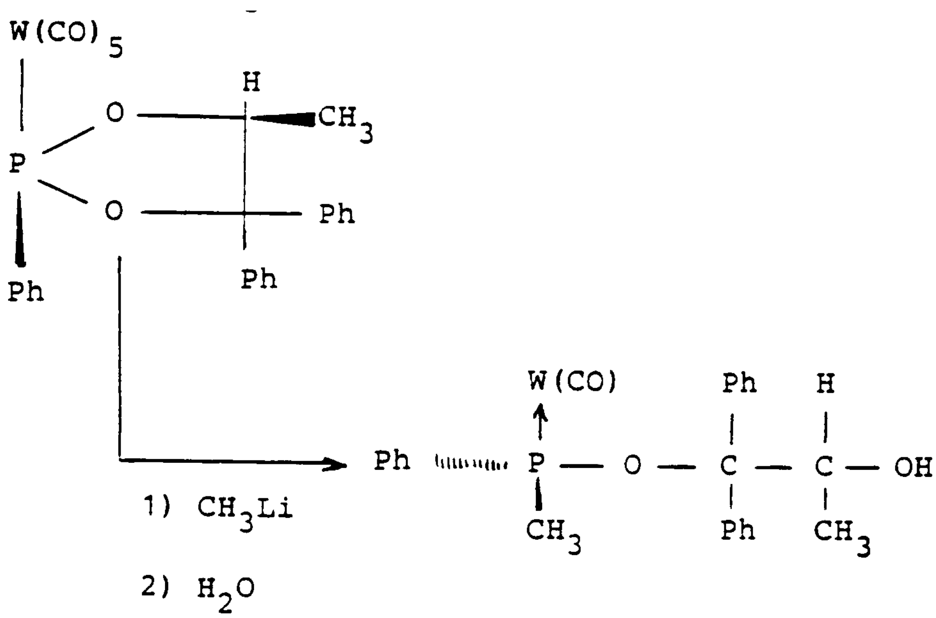


...(22)

..(23)

Le phosphinite complexé (23) correspond à la formule (7) dans laquelle $R^1$, $R^4$ et $R^6$ sont des phényles, $R^2$ et $R^5$ des méthyles, $R^7$ un hydrogène et T une liaison. L'atome de phosphore est engagé dans la sphère de coordination du tungstène ($W(CO)_5$..). Ce composé nouveau est obtenu par l'action du méthyl-lithium sur

le phosphonite complexe (22) (-78° C ; THF ; 2h : Rendement 60%). Le produit (23) est purifié par chromatographie sur silice (15% AcOEt/Hexane : rf:0,3).
Huile
RMN $^1H$ ($CDCl_3$)

| | | | |
|---|---|---|---|
| doublet (3H) | 1,15 ppm | $J_{HH}$ = 7Hz |
| " " | 2 ppm | $J_{PH}$ = 4Hz |
| multiplet (1H) | 5,1 ppm | |

| | | |
|---|---|---|
| singulet | (1H) | 2,9 ppm |
| massif | (15H) | 7-7,8 " |

$[\alpha]_D$ = 11° (c = 2; $CHCl_3$)

Le complexe précurseur (22) est un composé nouveau préparé selon un mode opératoire classique, c'est-à-dire irradiation 1/2 de $W(CO)_6$ dans THF, puis addition du dioxaphospholane obtenu par réaction de dichloro phényl phosphino avec le (-) diphényl-1,1 propane diol-1,2. La purification de ce complexe (22) est réalisée par chromatographie sur silice (éluant : 10% AcOEt/Hexane - rf 0,6).
PF = 150° C
$[\alpha]_D$ = -85° (c = 3,6; $CHCl_3$)
RMN $^1H$ ($CDCl_3$)

| | | | |
|---|---|---|---|
| doublet (3H) | 1,15 ppm | J = 8Hz | |
| quadruplet dédoublé | 4,85 ppm | ( $J_{HH}$ = 8H | (1H) |
| massif (15H) | 7 - 7,8 ppm | ( $J_{POCH}$ = 2H | |

## Revendications

1. Nouveau produit chimique, constitué par un composé organique du phosphore, caractérisé par la constitution :

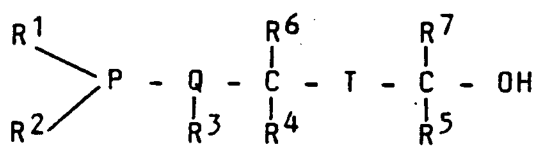

où Q est un atome de N ou de O, T est un alkylène pouvant porter des substituants, ou bien n'existe pas, tandis que $R^1$ à $R^7$, semblables ou différents, sont des H, des alkyles en $C_1$ à $C_{18}$, des alkényles jusqu'à $C_{18}$, des groupes cyclo-aliphatiques ou/et aryliques, éventuellement substitués, $R^3$ n'existant pas lorsque Q est oxygène.

2. Produit suivant la revendication 1, caractérisé en ce que des groupes $R^1$ à $R^7$ sont des alkyles en $C_1$ à $C_6$ ou des alkényles jusqu'à $C_6$.

3. Produit suivant la revendication 1 ou 2, caractérisé en ce que des groupes $R^1$ à $R^7$ sont des cycloalkyles ou des aryles.

4. Produit suivant une des revendications 1 à 3, caractérisé en ce qu'il est sous la forme d'un complexe dont le groupe complexant, en particulier $W(CO)_5$, $Mo(CO)_5$, CuBr ou $BH_3$, est lié à l'atome de phosphore.

5. Produit suivant une des revendications 1 à 4, caractérisé en ce qu'il est constitué par une amino-phosphine,

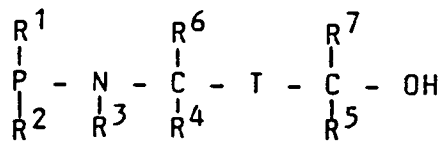

ou par le composé bis de celle-ci :

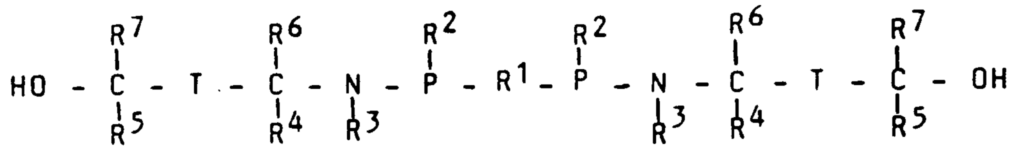

6. Produit suivant une des revendications 1 à 4, caractérisé en ce qu il est constitué par un phosphinite,

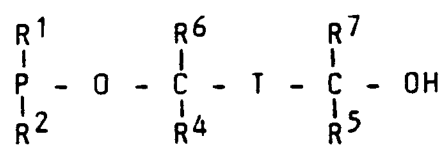

ou par le dérivé bis de celui-ci :

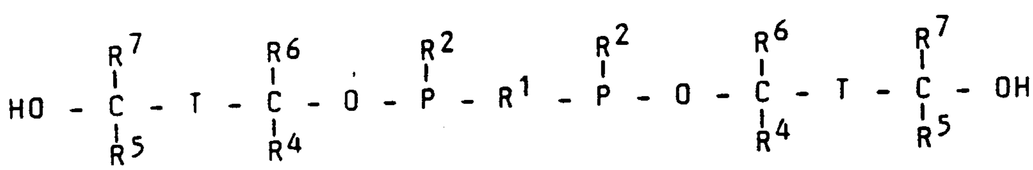

7. Produit suivant la revendication 5 ou 6, caractérisé en ce que $R^1$ est un méthyle, éthyle, propyle ou butyle, $R^2$ étant phényle, ou inversement, une partie des groupes $R^3$ à $R^7$ étant des $CH_3$ et une autre partie des phényles, le produit étant optiquement actif.

8. Produit suivant une des revendications 1 à 4,caractérisé en ce que T est $-CH-NHCOCHCl_2$, $R^4$ est $-C_6H_4-NO_2$, $R^5$, $R^6$ et $R^7$ étant des H.

9. Procédé de préparation d'un produit chimique suivant une des revendications 1 à 8, caractérisé en ce que l'on fait réagir un composé organo-métallique $R^2M$ avec un oxaza ou dioxa- phosphacycloalcane de formule :

(5) 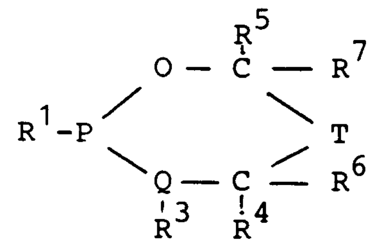 ou

(6) 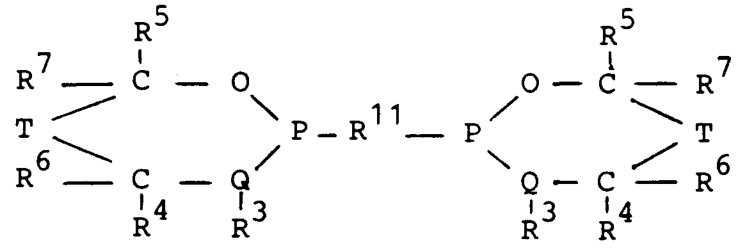

où les symboles Q, T et $R^1$ à $R^7$ ont la même signification que dans la revendication 1, et l'on hydrolyse le milieu réactionnel, $R^{11}$ étant un alkényle ou arylényle.

**10.** Procédé suivant la revendication 9, caractérisé en ce que la réaction avec l'organo-métallique $R^2M$ a lieu à basse température, de préférence entre -78° et -40° C, sous une atmosphère inerte, M préféré étant le Li, tandis que $R^2$, défini dans la revendication 1, est en particulier un alkyle en $C_1$ à $C_4$ ou un phényle.

**11.** Procédé suivant la revendication 9 ou 10, caractérisé en ce que le composé de départ (5 ou 6) est pris sous une forme complexée, en particulier avec un groupe $W(CO)_5$, $Mo(CO)_5$, $BH^3$ ou CuBr sur le ou les atomes de phosphore.

**12.** Application du produit suivant l'une des revendications 1 à 8, caractérisée en ce que ce produit est transformé en une phosphine, un oxyde de phosphine, une halogéno-phosphine, un phosphinite, un acide phosphineux, ou les bis-composés correspondants, par une réaction connue en soi, en particulier traitement avec un organo-métallique, par un halogénure d'alkyle ou d'aryle, par alcoolyse, par hydrolyse ou par l'action d'un hydracide.

**Claims**

**1.** Novel chemical product, consisting of an organic phosphorus compound, characterised by the composition:

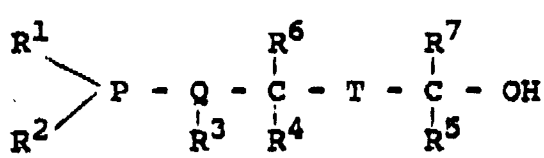

where Q is an N or O atom, T is an alkylene able to carry substituents, or does not exist, whilst $R^1$ to $R^7$, alike or different, are H atoms, $C_1$ to $C_{18}$ alkyls, alkenyls up to $C_{18}$, cyclo-aliphatic and/or aryl groups, optionally substituted, $R^3$ not existing when Q is oxygen.

**2.** Product according to claim 1, characterised in that $R^1$ to $R^7$ groups are $C_1$ to $C_6$ alkyls or alkenyls up to $C_6$.

**3.** Product according to claim 1 or 2, characterised in that $R^1$ to $R^7$ groups are cycloalkyls or aryls.

**4.** Product according to one of claims 1 to 3, characterised in that it is in the form of a complex whose chelating group, in particular $W(CO)_5$, $Mo(CO)_5$, CuBr or $BH_3$, is bonded to the phosphorus atom.

5. Product according to one or claims 1 to 4, characterised in that it consists of an amino-phosphine,

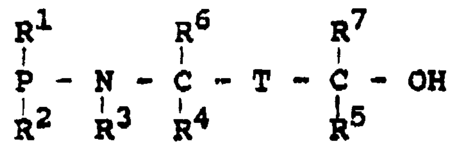

or the bis compound of this:

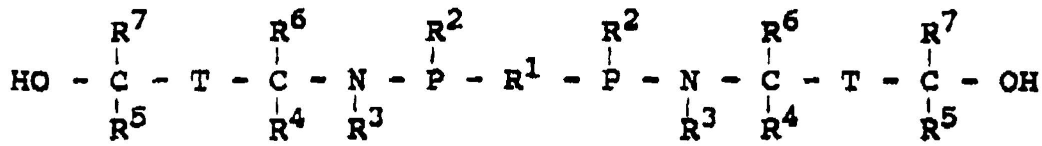

6. Product according to one of claims 1 to 4, characterised in that it consists of a phosphinite,

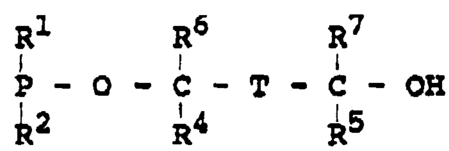

or the big derivative of this:

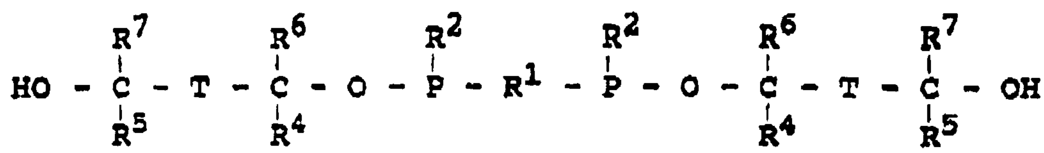

7. Product according to claim 5 or 6, characterised in that $R^1$ is a methyl, ethyl, propyl or butyl group, $R^2$ being phenyl, or vice versa, some of the groups $R^3$ to $R^7$ being $CH_3$ and others phenyls, the product being optically active.

8. Product according to one of claims 1 to 4, characterised in that T is $-CH-NHCOCHCl_2$, $R^4$ is $-C_6H_4-NO_2$, $R^5$, $R^6$ and $R^7$ being H atoms.

9. Method of preparing a chemical product according to one of claims 1 to 8, characterised in that an organo-metallic compound $R^2M$ is reacted with an oxaza or dioxa-phosphacycloalkane of formula:

(5) 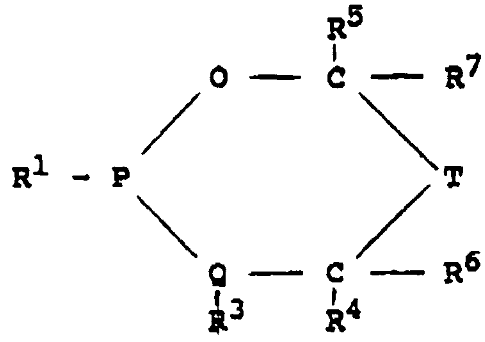 or

(6) 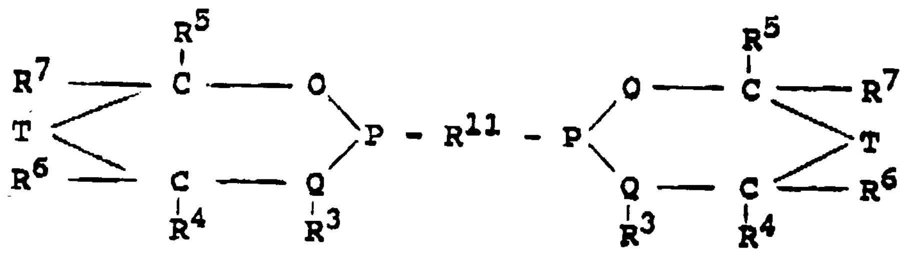

where the symbols Q, T and $R^1$ to $R^7$ have the same meaning as in claim 1, and the reaction medium is hydrolysed, $R^{11}$ being an alkenyl or arylenyl.

**10.** Method according to claim 9, characterised in that the reaction with the organo-metallic compound $R^2M$ takes place at low temperature, preferably between -78° and -40°C, in an inert atmosphere, M preferably being Li, whilst $R^2$, defined in claim 1, is in particular a $C_1$ to $C_4$ alkyl or a phenyl.

**11.** Method according to claim 9 or 10, characterised in that the starting compound (5 or 6) is taken in a chelated form, in particular with a $W(CO)_5$, $Mo(CO)_5$, $BH_3$ or CuBr group on the phosphorus atom or atoms.

**12.** Application of the product according to one of claims 1 to 8, characterised in that this product is transformed into a phosphine, a phosphine oxide, a halogeno-phosphine, a phosphinite, a phosphinic acid, or the corresponding bis compounds, by means of a reaction known per se, in particular treatment with an organo-metallic compound, by an alkyl or aryl halide, by alcoholysis, by hydrolysis or by the action of a hydrogen acid.

**Patentansprüche**

**1.** Neues chemisches Produkt, das von einer organischen Phosphorverbindung gebildet wird, gekennzeichnet durch die Konstitution

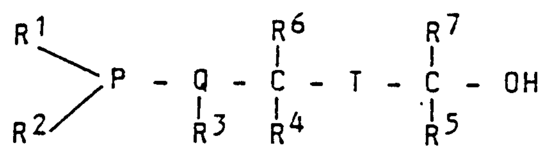

worin Q ein N- oder O-Atom ist, T ein Alkylen ist, das Substituenten aufweisen kann, oder nicht vorhanden ist, während $R^1$ bis $R^7$, gleich oder verschieden, H, Alkyle von $C_1$ bis $C_{18}$, Alkenyle bis zu $C_{18}$, cycloaliphatische und/oder Arylgruppen, gegebenenfalls substituiert, sind, wobei $R^3$ nicht existiert, wenn Q Sauerstoff ist.

**2.** Produkt nach Anspruch 1, dadurch gekennzeichnet, daß die Gruppen $R^1$ bis $R^7$ Alkyle von $C_1$ bis $C_6$ oder Alkenyle bis zu $C_6$ sind.

**3.** Produkt nach Anspruch 1 oder 2, dadurch gekennzeichnet, daß die Gruppen $R^1$ bis $R^7$ Cycloalkyle oder Aryle sind.

**4.** Produkt nach einem der Ansprüche 1 bis 3, dadurch gekennzeichnet, daß es in Form eines Komplexes vorliegt, dessen komplexierende Gruppe, insbesondere $W(CO)_5$, $Mo(CO)_5$, CuBr oder $BH_3$, an das Phosphoratom gebunden ist.

**5.** Produkt nach einem der Ansprüche 1 bis 4, dadurch gekennzeichnet, daß es von einem Aminophosphin gebildet ist,

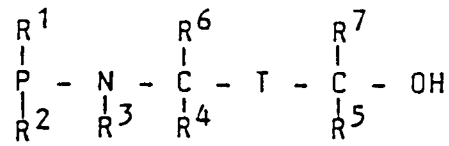

oder von der Bis-Verbindung desselben

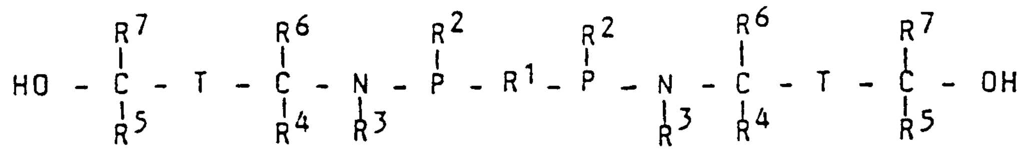

**6.** Produkt nach einem der Ansprüche 1 bis 4, dadurch gekennzeichnet, daß es von einem Phosphinit

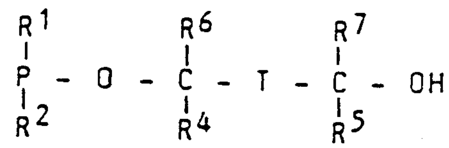

oder von dem Bis-Derivat desselben

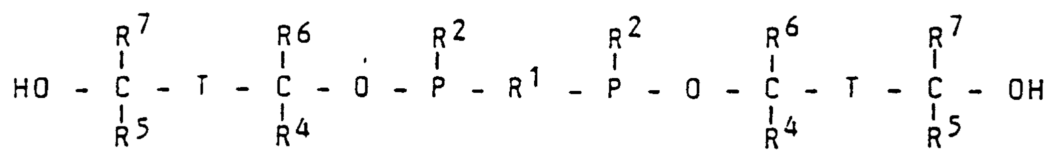

gebildet wird.

**7.** Produkt nach Anspruch 5 oder 6, dadurch gekennzeichnet, daß $R^1$ ein Methyl, Ethyl, Propyl oder Butyl ist, $R^2$ Phenyl ist, oder umgekehrt, ein Teil der Gruppe $R^3$ bis $R^7$ $CH_3$ sind und ein anderer Teil Phenyle, wobei das Produkt optisch aktiv ist.

**8.** Produkt nach einem der Ansprüche 1 bis 4, dadurch gekennzeichnet, daß T $-CH-NHCOCHCl_2$ ist, $R^4$ $-C_6H_4-NO_2$ ist, $R^5$, $R^6$ und $R^7$ H sind.

**9.** Verfahren zur Herstellung eines chemischen Produkts nach einem der Ansprüche 1 bis 8, dadurch gekennzeichnet, daß man eine metallorganische Verbindung $R^2M$ mit einem Oxaza- oder Dioxa-phosphacycloalkan der Formel

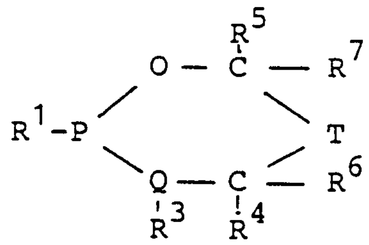

oder

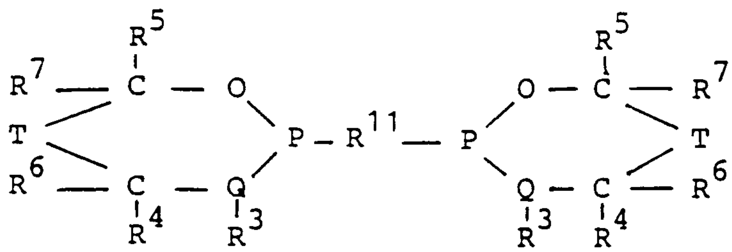

umsetzt, worin die Symbole Q, T und $R^1$ bis $R^7$ die gleiche Bedeutung haben, wie in Anspruch 1, und man das Reaktionsmedium hydrolysiert, wobei $R^{11}$ ein Alkenyl oder Arylenyl ist.

**10.** Verfahren nach Anspruch 9, dadurch gekennzeichnet, daß die Reaktion mit der metallorganischen Verbindung $R^2M$ bei niedriger Temperatur, vorzugsweise zwischen -78° und -40° C, unter einer inerten Atmosphäre stattfindet, wobei M vorzugsweise Li ist, während $R^2$, definiert wie in Anspruch 1, insbesondere ein Alkyl von $C_1$ bis $C_4$ oder ein Phenyl ist.

**11.** Verfahren nach Anspruch 9 oder 10, dadurch gekennzeichnet, daß die Ausgangsverbindung (5 oder 6) in komplexierter Form verwandt wird, vorzugsweise mit einer Gruppe $W(CO)_5$, $Mo(CO)_5$, $BH_3$ oder CuBr an dem oder den Phosphoratomen.

**12.** Verwendung des Produkts nach einem der Ansprüche 1 bis 8, dadurch gekennzeichnet, daß das Produkt in ein Phosphin, Phosphinoxid, Halogenphosphin, Phosphinit, eine Phosphinsäure oder die entsprechenden Bis-Verbindungen durch eine an und für sich bekannte Reaktion umgewandelt wird, insbesondere durch Behandlung mit einem Metallorganikum, durch ein Alkyl- oder Arylhalogenid, durch Alkoholyse, durch Hydrolyse oder durch Einwirkung eines Hydrazids.